# DEMANDE DE BREVET EUROPEEN

(11) **EP 4 525 463 A1**
(43) Date de publication de la demande: **19.03.2025**
(21) Numéro de dépôt: 24200094.1
(22) Date de dépôt: 12.09.2024
(51) Int. Cl.: H04N 21/436, H04N 21/442, H04N 21/462, H04N 21/24, H04N 21/647, H04N 21/845

(54) **ADAPTATION DYNAMIQUE DE LA QUALITÉ POUR TRANSMISSION MULTI-RÉSOLUTIONS DE SEGMENTS DE CONTENUS**

(30) Priorité: 18.09.2023 FR 2309824
(71) Demandeur: Orange, 92130 Issy-les-Moulineaux (FR)
(72) Inventeur: RIVOALEN, Mathieu, 92326 CHATILLON CEDEX (FR); MARCHAND, Hervé, 92326 CHATILLON CEDEX (FR)
(74) Mandataire: Regimbeau

(57) **Abrégé**

Procédé de distribution d'un flux de segments d'un contenu issu d'un serveur (S) par au moins un agent vers une pluralité de terminaux, le procédé comprenant, à différents instants au cours de la réception dudit contenu :
- une étape de vérification (S4) d'un critère de charge dudit agent, et,
- une étape d'adaptation (S5) en fonction de ladite vérification, de la distribution des segments de contenu vers les terminaux.

## Description

### DOMAINE DE L'INVENTION

La présente invention concerne le domaine de la transmission sur un réseau de télécommunication de flux de données, notamment comportant du contenu multimédia numérique, à savoir de contenus audio et/ou vidéo numériques, également appelés contenus audiovisuels.

Elle concerne plus particulièrement la gestion de l'accès par un dispositif de lecture à des segments d'un contenu accessibles depuis des serveurs de contenu. Ce contenu peut être un contenu multimédia (vidéo ou audio-vidéo par exemple) qui peut être en temps-réel (appelé contenu « live » par l'homme du métier, ou direct), ou à la demande (VoD pour « Video on Demand », toujours en anglais).

De façon classique, un flux de données, notamment de contenu multimédia, est divisé en segments.

Ces segments peuvent être obtenu selon différentes modalités. Notamment, les segments peuvent être obtenus selon un mode unicast, par exemple selon le mode U-ABR (pour « unicast adaptive bitrate » en anglais), ou selon un mode multicast, par exemple selon le mode M-ABR (pour « multicast adaptive bitrate » en anglais).

Les modes U-ABR et M-ABR permettent de télécharger des segments de contenu selon une technique de téléchargement adaptatif progressif (ou « adaptative streaming » en anglais) par l'homme du métier.

Un même contenu est transmis en différentes résolutions auxquelles chaque terminal peut souscrire.

Dans un mode d'obtention (ou transmission) unicast, les segments sont transmis entre un émetteur (serveur de contenu...) et un destinataire (un dispositif de lecture...). Lorsque plusieurs dispositifs de lecture souhaitent obtenir un même contenu, les segments sont transmis à chacun de façon indépendante, en autant de flux de segments.

Le mode d'obtention (ou transmission) multicast vise à mutualiser la transmission vers plusieurs destinataires. Les destinataires qui souhaitent obtenir le contenu demandent à s'abonner à ce service de transmission multicast. Un mécanisme est alors mis en place pour raccorder ces nouveaux destinataires à un arbre de distribution existant. Ce raccordement vise à optimiser la mutualisation de la transmission en prenant en compte la topologie du réseau.

Ainsi, plus on est près de la source de contenu, plus il y a mutualisation, c'est-à-dire qu'un même segment n'est transmis qu'une unique fois pour un ensemble de destinataires distincts. On atteint ainsi un gain substantiel en bande-passante.

En général, dans un réseau de distribution audio-visuel, CDN (pour « Content Delivery Network »), les flux de segments de contenu sont

Dans tous les cas, des segments de contenu à différentes résolutions sont transmis à un agent intermédiaire, qui est au plus près des terminaux destinataires et qui a la charge de retransmettre les segments de contenu à chaque terminal dans la résolution que celui-ci requiert et en mode unicast.

Dans un tel schéma, on comprend que les agents intermédiaires doivent en temps réel traiter les flux de segments entrants pour les répartir les paquets appropriés vers les terminaux. En outre, les terminaux connectés à un même agent intermédiaire peuvent requérir des contenus différents.

Or, les agents intermédiaires sont généralement embarqués dans des passerelles personnelles qui ne disposent pas de ressources très importantes, tant en termes de capacités de traitement que de capacités mémoire.

Aussi, dès lors que le nombre de terminaux et/ou le nombre de contenus demandés, et/ou le nombre de résolutions par contenus demandé les agents augmentent, l'agent peut devenir un goulot d'étranglement et pénaliser les performances globales du réseau de distribution de contenu et l'expériences des utilisateurs des terminaux.

Une telle situation n'est pas acceptable pour les utilisateurs, et il existe donc un besoin d'améliorer les propositions actuelles de l'état de la technique.

### RESUME DE L'INVENTION

L'invention vise à améliorer l'expérience générale des utilisateurs des terminaux connectés à un réseau de distribution de contenu par un agent intermédiaire. En particulier, elle vise à éviter ou tout du moins minimiser ce phénomène de contention au niveau des agents intermédiaires.

À ces fins, selon un premier aspect, la présente invention peut être mise en oeuvre par un procédé de distribution d'un flux de segments d'un contenu issu d'un serveur par au moins un agent vers une pluralité de terminaux, le procédé comprenant, à différents instants au cours de la réception dudit contenu :
- une étape de vérification d'un critère de charge dudit agent, et,
- une étape d'adaptation en fonction de ladite vérification, de la distribution des segments de contenu vers les terminaux

Suivant des modes de réalisation préférés, l'invention comprend une ou plusieurs des caractéristiques suivantes qui peuvent être utilisées séparément ou en combinaison partielle entre elles ou en combinaison totale entre elles :
- le contenu est issu d'un serveur dans un mode de transmission multi-résolutions en réponse à une requête spécifiant une résolution maximale, et dans lequel ladite adaptation comprend une détermination d'une nouvelle résolution maximale pour transmission d'une requête suivante vers ledit serveur.
- la réception du contenu transmis en mode multi-résolution avec la nouvelle résolution maximale est suivie d'une modification de la distribution des segments de contenu vers les terminaux prenant en compte la nouvelle résolution maximale
- l'adaptation comprend un établissement d'une connexion d'au moins un terminal de ladite pluralité audit serveur afin de recevoir directement lesdits segments de contenu. On peut ainsi également réduire de la sorte le besoin en ressources au niveau de l'agent, en déroutant certain trafic.
- l'établissement d'une connexion comprend une transmission audit au moins un terminal d'un message adapté pour déclencher une requête dudit au moins terminal vers ledit serveur pour recevoir lesdits segments de contenu. L'agent peut ainsi conserver le contrôle et décider, au fil de l'eau, de rediriger du trafic, ou au contraire de le réintégrer en fonction de l'évolution de sa propre charge.
- l'étape d'adaptation n'est déclenchée que si un nombre de terminaux parmi ladite pluralité est inférieur à un seuil donné. On peut ainsi arbitrer la dégradation de la résolution maximale associée à un contenu en fonction d'un nombre de terminaux recevant ce flux, et d'ainsi minimiser le nombre d'utilisateurs pénalisés.
- le critère de charge comprend une comparaison avec un seuil donné d'une mesure d'activité d'un processeur dudit agent et/ou d'une mesure de remplissage d'une mémoire dudit agent. Ces critères permettent en effet de révéler l'état de charge d'un agent, impliquant la dégradation de ses performances, mais d'autres critères peuvent être également envisagés en alternative ou de façon cumulative.
- le critère de charge dépend d'un nombre de flux reçus par ledit agent et/ou d'un nombre de résolutions et/ou d'un nombre de terminaux de ladite pluralité.
- le mode de transmission multi-résolutions est un mode de transmission multicast à débit adaptatif, m-ABR.
- l'agent est embarqué dans une passerelle, par exemple une passerelle personnelle de type Livebox^{™} de la société Orange. On évite ainsi de disposer d'un appareil supplémentaire.

Un autre aspect de l'invention concerne un agent pour la distribution d'un flux de segments d'un contenu issu d'un serveur vers une pluralité de terminaux, ledit agent étant adapté pour, à différents instants au cours de la réception du contenu :
- vérifier un critère de charge dudit agent et,
- en fonction de ladite vérification, adapter la distribution des segments de contenu vers les terminaux.

Un autre aspect de l'invention concerne une passerelle comportant un agent tel que précédemment défini.

Un autre aspect de l'invention concerne un programme d'ordinateur apte à être mis en oeuvre sur un dispositif de supervision, le programme comprenant des instructions de code qui, lorsqu'il est exécuté par un processeur, réalise les étapes du procédé tel que précédemment décrit.

Un autre aspect de l'invention concerne un support de données sur lequel a été mémorisé au moins une série d'instructions de code de programme pour l'exécution d'un procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES FIGURES

Les dessins annexés illustrent l'invention :
- la figure 1 illustre un réseau de télécommunication permettant la mise en oeuvre d'un procédé selon des modes de réalisation de l'invention ;
- la figure 2 illustre un organigramme d'un procédé possible de distribution d'un flux de segments de contenu par un agent vers une pluralité de terminaux, selon une mise en oeuvre de l'invention.
- Les figures 3a et 3b illustrent un exemple de déroulement du procédé, selon une mise en oeuvre de l'invention.

### DESCRIPTION DETAILLEE DE MODES DE REALISATION DE L'INVENTION

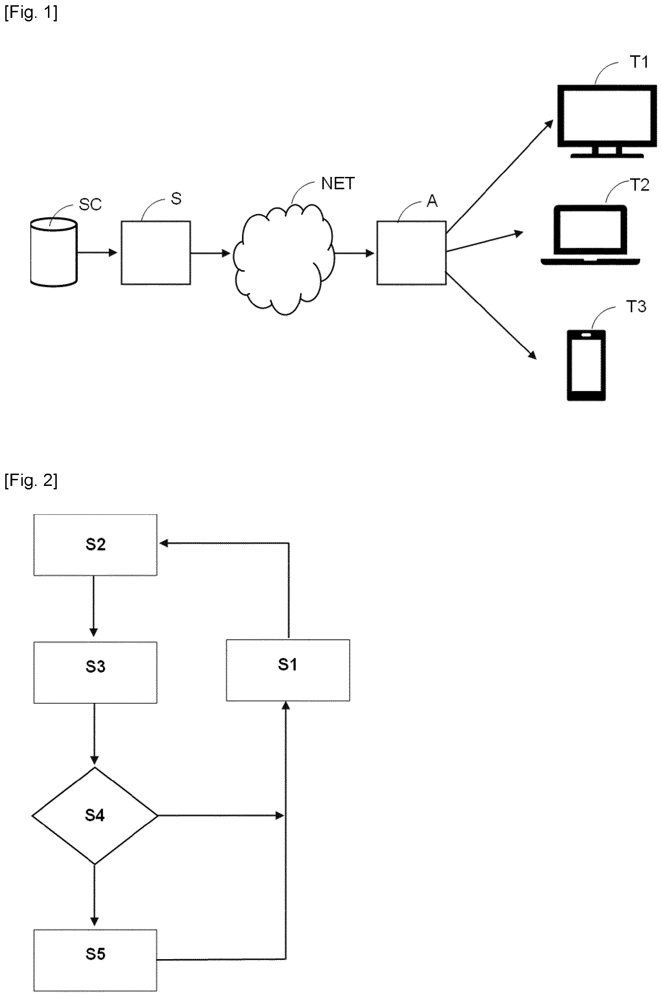

La figure 1 illustre un réseau de télécommunication, NET, permettant l'acheminement de flux de données, formés de segments de contenu, vers une pluralité de terminaux ou dispositif de lecture T1, T2, T3.

Ces terminaux ou dispositifs de lecture peuvent être de différents types, tel que notamment un terminal mobile, un téléviseur connecté, un ordinateur, etc.

Le terminal mobile peut typiquement être un téléphone intelligent de type « smartphone » ou une tablette numérique, adapté pour recevoir des flux multimédias et à les produire sur une interface du terminal ou connecté audit terminal.

Le téléviseur peut être nativement connecté ou l'être par le truchement d'un dispositif associé tel que par exemple une clé HDMI connecté au téléviseur.

Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Dans ce dernier cas, le dispositif de lecture de contenu multimédia peut être ce dispositif associé.

Les flux de données peuvent être des flux multimédias. Ceux-ci comprennent typiquement des flux (ou contenus) vidéo ou audio-vidéo. Il peut également s'agir de flux audio (musique, émissions radio...), ou de contenus interactifs (y compris jeux). Il peut s'agir de contenu à la demande ou de contenu « en direct » ou « live ». Ce mode de transmission peut être un mode de transmission de type « IPTV » (sigle de « Internet Protocol Télévision » en anglais), mais d'autres modes de transmission sont bien évidemment envisageables.

D'une façon générale, les contenus sont découpés en segments.

Lorsqu'un mode de téléchargement adaptatif de type ABR (« Adaptive Bit Rate ») est mis en oeuvre, les segments peuvent être disponibles en plusieurs résolutions. Un fichier dit « manifeste » permet aux dispositifs de lecture, T, de choisir une résolution en fonction notamment de leur environnement local.

En mode unicast, ces fichiers manifestes sont transmis par les serveurs unicast directement et les terminaux négocient directement avec le serveur pour choisir la résolution souhaitée.

En mode multicast (m-ABR), les fichiers manifestes sont fournis aux terminaux par l'agent A, et les terminaux négocient avec cet agent pour choisir la résolution souhaitée. Les segments correspondant leur sont ensuite transmis en mode unicast, localement.

Ainsi l'agent fonctionne, du point de vue des agents sensiblement comme un serveur de réseau de distribution de contenu, CDN. Aussi, un tel agent est parfois nommé « nano CDN ».

Les résolutions correspondent à des qualités du contenu vidéo (et/ou audio) et conséquemment à des débits différents sur le réseau de télécommunication.

Les qualités disponibles en ABR peuvent varier en fonction de la plateforme de streaming vidéo utilisée, mais en général et actuellement, les qualités courantes comprennent :
- Très basse qualité : souvent adaptée pour les utilisateurs avec des connexions Internet très lentes ou instables, cette qualité peut avoir une résolution de 240p et un débit de 200 kbps.
- Basse qualité : cette qualité convient pour les connexions Internet plus stables mais encore relativement lentes, avec une résolution de 360p et un débit de 400-700 kbps.
- Qualité standard : cette qualité convient pour la plupart des connexions Internet, avec une résolution de 480p ou 720p et un débit de 800 kbps à 2 Mbps.
- Haute qualité : cette qualité convient pour les connexions Internet rapides et fiables, avec une résolution de 1080p et un débit de 2-5 Mbps.
- Très haute qualité : cette qualité convient pour les connexions Internet très rapides, avec une résolution de 4K et un débit de plus de 10 Mbps.

Il est important de noter que les qualités disponibles peuvent varier en fonction des capacités de bande passante de l'utilisateur et du réseau, ainsi que de la qualité et de la complexité du contenu vidéo diffusé. Le fichier « manifeste » peut alors être modifié en fonction des variations effectuées au niveau du réseau ou du serveur de contenu.

Ce contenu peut être initialement disponible sur une source SC.

Cette source est connectée à un réseau de diffusion de contenu, CDN (pour « Content Delivery Network ») par le truchement d'un serveur S, en charge notamment de la mise en forme des segments pour une transmission en multi-résolution, ABR, et pour la mise en place éventuellement d'un mode de transmission multicast, par exemple m-ABR (pour « multicast ABR »).

Le réseau de distribution de contenu forme, en quelque sorte, une surcouche (ou « overlay » en anglais), au réseau de télécommunication, NET, tel qu'Internet.

Le réseau de diffusion de contenu CDN peut comporter un ou plusieurs serveurs de contenus distincts. Ces serveurs peuvent être des serveurs unicast ou des serveurs multicast. Sur la figure 1, un unique serveur S est représenté, mais il faut comprendre que le procédé et l'agent décrits dans la suite peuvent prendre en compte une multiplicité de serveurs.

Typiquement, les segments de la source SC sont transmis à un premier serveur unicast, et à un second serveur multicast. Le serveur multicast, ou « multicasteur », peut recevoir les segments du serveur unicast lorsqu'une décision est prise de rendre possible la transmission en multicast. Cette décision peut par exemple être prise par le premier serveur de contenu ou par un dispositif de supervision ayant connaissance du nombre de dispositifs de lecture souhaitant recevoir un contenu donné.

Le réseau de diffusion de contenu CDN comporte également des équipements, ou « agents » intermédiaires. Ces agents A peuvent former une passerelle entre le réseau public sur lequel le réseau de diffusion de contenu CDN est déployé et un réseau privé auquel sont raccordés différents dispositifs de lecture de contenu, T1, T2, T3.

Ce réseau local peut être un réseau installé chez un utilisateur (réseau domestique) lui permettant de connecter différents équipements, ou dispositifs de lecture de contenu, à la fois entre eux et à la passerelle vers le réseau public. Un tel réseau local peut être conforme à différentes technologies, par exemple Wi-Fi, Ethernet^{™}, Bluetooth, etc., ou à une combinaison de plusieurs de tels réseaux.

Selon un mode de réalisation, l'agent A est embarqué dans une passerelle appartenant au réseau domestique et au réseau public. Cette passerelle peut également fournir des fonctionnalités supplémentaires comme celle de routeur Wi-Fi, etc.

Un exemple d'une telle passerelle est la Livebox^{™} de la société Orange.

La figure 2 illustre un organigramme d'un procédé possible de distribution d'un flux de segments de contenu par un agent A vers une pluralité de terminaux, T1, T2, T3.

Ce processus est itératif car l'agent transmets des séries de requêtes afin de de recevoir en réponse les segments de contenu.

Selon le procédé proposé, à chaque itération, on vérifie si une condition sur une critère de charge est vérifié afin de décider d'une éventuelle adaptation des résolutions demandées à l'itération suivante.

Le procédé illustré concerne un serveur unique, pour la simplicité de l'explication, mais il est clair que ce même procédé s'applique, mutatis mutandis, à une pluralité de serveurs S.

Dans une étape S1, l'agent A transmet une requête à un serveur de contenu S spécifiant une résolution maximale.

Cette résolution maximale est déterminée à partir des résolutions proposées par le serveur S à travers un fichier manifeste décrivant les résolutions disponibles.

Ces résolutions disponibles auprès du serveur S peuvent être proposées par l'agent A aux terminaux T1, T2, T3 qui lui sont connectées (au sein d'un réseau local) à travers un fichier manifeste. Les terminaux peuvent alors choisir une résolution en fonction de leur environnement propre (par exemple la qualité de la connexion à l'agent A, la résolution de leur écran, leur capacité de traitement, les choix de l'utilisateur, etc.)

La résolution maximale requise par l'agent auprès du serveur S peut être déterminée également en fonction des choix des différents terminaux. Elle peut correspond par exemple à la résolution maximale choisie par les terminaux (pour ce même contenu).

En réponse à cette requête S1, le serveur S transmet, dans une étape S2, le ou les segments de contenu à l'agent A. Selon un mode de réalisation, ce ou ces segments correspondent à une transmission multi-résolution correspondant à la résolution maximale requise.

Dans une étape S3, l'agent A distribue les segments reçus de contenu vers les terminaux T1, T2, T3 dans la résolution choisie par chacun d'eux.

La transmission des segments est consécutive de la réception de requêtes de segments transmis par les terminaux à l'agent A.

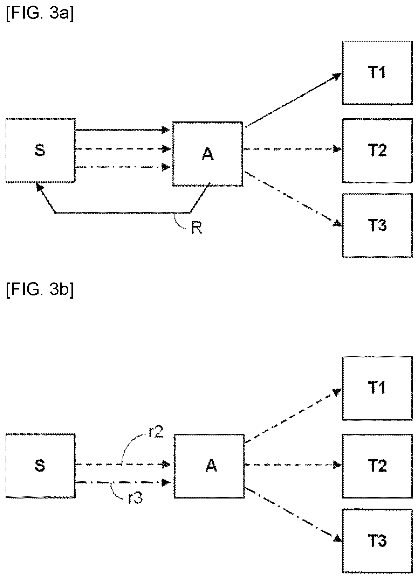

La figure 3a illustre un exemple de mise en oeuvre avec trois terminaux, T1, T2, T3, chacun ayant choisi une résolution différente, respectivement r1, r2, r3. Dans l'exemple illustré, on suppose que ces résolutions sont ordonnées par ordre de qualité r1 > r2 > r3.

Les segments sont transmis dans les 3 résolutions possibles r1, r2, r3 du serveur vers l'agent. L'agent A traite classiquement les segments reçus pour les distribuer vers les terminaux T1, T2, T3

A différents instants au cours de la réception du contenu, dans une étape S4, l'agent vérifie un critère de charge. Ces instants peuvent correspondre à des réceptions, S2, d'une réponse à des requêtes S1. En particulier, ces instants peuvent être chaque réception S2, mais d'autres modes de réalisation peuvent être envisagés (période de temps, ...).

Selon un mode de réalisation, ce critère de charge peut comprendre une comparaison avec un seuil donné d'une mesure d'activité d'un processeur de l'agent A, et/ou d'une mesure de remplissage d'une mémoire dudit agent. Cette mémoire peut être une mémoire RAM ou une mémoire Flash de l'agent A. Bien entendu, le critère de charge peut comprendre des comparaisons d'autres mesures encore.

La charge de l'agent peut être lié à un grand volume de données traité.

Le volume de ces données est lié
- au nombre de flux de données reçus
- au nombre de résolutions pour chaque flux de données
- à la résolution maximale pour chaque flux de données (car plus une résolution est qualitative et plus les données associées sont volumineuses et nécessitent de ressources de traitement),
- au nombre de terminaux connectés à l'agent pour recevoir des segments.

Selon un mode de réalisation, on peut considérer que l'agent A est chargé lorsqu'au moins une des mesures effectuées dépasse un seuil associé. Selon un autre mode de réalisation une comparaison globale peut être effectuée sur la base d'une somme, éventuellement pondérée, des différentes mesures et de sa comparaison avec un unique seuil.

Les différents seuils peuvent être préalablement déterminés.

Selon un mode de réalisation, le critère de charge peut dépendre d'un nombre de flux reçus par l'agent A, et/ou d'un nombre de résolutions et/ou d'un nombre de terminaux connectés à l'agent A.

En fonction du résultat de l'étape de vérification du critère de charge, une étape d'adaptation S5 de la distribution des segments de contenu vers les terminaux peut ou non être mise en place.

Cette étape S4 peut comprendre de déterminer un changement dans la charge de l'agent, et notamment à détecter les transitions entre un état normal à un état chargé ainsi que d'un état chargé à un état normal.

Des transitions entre différents niveaux de charge peuvent également être considérés. On peut alors associer des règles d'adaptation en fonction des niveaux de charge.

Si l'état de charge est constant, c'est-à-dire si le résultat de la vérification du critère de charge est le même qu'à l'itération précédente (lors de la requête des segments de contenu précédents), alors il n'y a pas de besoin d'adaptation, et le procédé reboucle à l'étape S1 de transmission au serveur S d'une requête en nouveaux segments. Cette requête spécifie la même résolution maximale que la requête principale (sauf éventuellement si un des terminaux connectés choisit un changement de résolution).

Si l'état de charge n'est pas constant, c'est-à-dire si l'on passe d'une itération où le critère de charge est respecté à une itération où le critère de charge n'est plus respecté, ou bien vice-versa, alors une étape d'adaptation S5 peut être déclenchée.

Une étape d'adaptation S5 de la distribution des segments de contenu vers les terminaux est alors mise en oeuvre en fonction de la vérification de l'étape précédente S4.

Selon un mode de réalisation, cette étape d'adaptation S5 comprend une modification de la distribution des segments de contenu vers les terminaux.

La modification de la distribution peut être mise en oeuvre de différentes façons.

Cette modification de la distribution peut comprendre la détermination d'une nouvelle résolution maximale pour transmission d'une requête suivante vers ledit serveur.

Dans le cas d'une dégradation de la charge, l'adaptation vise à réduire le besoin de ressources sur l'agent en abaissant la résolution maximale requise au serveur S.

Selon un mode de réalisation, la résolution maximale est abaissée d'un niveau.

La résolution maximale étant la plus impactante en termes de ressources utilisées, son abaissement permet de substantiellement baisser la charge de l'agent tout en conservant une qualité acceptable pour le plus grand nombre de terminaux connectés.

Lorsque l'agent A gère plusieurs flux de segments de contenu différent, la résolution maximale peut n'être abaissée que pour certains flux de segments uniquement.

Par exemple, l'étape d'adaptation S5 n'est déclenché que si un nombre de terminaux parmi ladite pluralité est inférieur à un seuil donné. Auquel cas, une adaptation peut être déclenchée pour d'autres flux de segments de contenu transitant par le même agent.

Il peut être ainsi choisi d'arbitrer la dégradation de la résolution maximale associée à un contenu, en fonction d'un nombre de terminaux recevant ce flux. On peut ainsi choisir d'abaisser la résolution maximale des flux de contenus correspondant au plus petit nombre de terminaux qui y ont souscrit. Ainsi, à gain en ressources de traitement substantiellement égal, on pénalise un plus petit nombre d'utilisateurs.

Ainsi, si plusieurs terminaux reçoivent une première chaîne de contenu et qu'un seul terminal reçoit une autre chaîne de contenu, il sera préféré de dégrader la qualité pour cet autre terminal, ou bien de forcer sa connexion directe au serveur correspondant à cette autre chaîne. On optimise ainsi la gestion des ressources de l'agent pour le plus grand nombre de terminaux.

Par ailleurs des tâches concurrentes peuvent être également déployées sur l'agent, de sorte que sa charge peut évoluer dans le temps indépendamment des charges induites par les seuls flux de segments de contenu. Aussi, l'étape adaptation S5 proposée peut être déclenchée même lorsque les terminaux ne modifient pas les qualités souhaitées dans les requêtes (l'étape de vérification S4 étant mise en oeuvre pour toute requête en segment de contenu.)

Par ailleurs, l'adaptation de la distribution des segments de contenu vers les terminaux peut également comprendre l'établissement d'une connexion d'au moins un terminal de la pluralité au serveur S afin de recevoir directement les segments de contenu. Autrement dit, le flux de segment de contenu ne transite alors via l'agent, ce qui permet d'abaisser sa charge.

L'établissement d'une connexion peut comprendre une transmission à ce au moins un terminal d'un message adapté pour déclencher une requête de celui-ci vers le serveur S pour recevoir les segments de contenu.

Dans le cas d'une amélioration (c'est-à-dire diminution) de la charge, l'adaptation vise à augmenter la qualité pour les utilisateurs des terminaux en augmentant la résolution maximale requise au serveur S. En général, il s'agit de revenir à une situation antérieure à une précédente dégradation.

Cette étape d'adaptation comprend donc la détermination d'une nouvelle résolution maximale. Cette nouvelle résolution maximale est ensuite transmise vers le serveur S à l'étape S1 de l'itération suivante.

En général, en phase d'initialisation, les terminaux vont requérir des qualités croissantes au fil du temps, jusqu'à atteindre une qualité cible ou les limites du réseau (ou de l'agent ou du serveur). Le procédé proposé s'applique à ce mécanisme en permettant une adaptation dynamique à chaque étape de la montée en puissance des terminaux : l'accès à une qualité supérieure est ainsi assujetti aux mécanismes d'adaptation S5 proposé.

Dans l'exemple de la figure 3b, lié à l'exemple de la figure 3a, on suppose une charge trop importante de l'agent A (le critère de charge est rempli). L'étape d'adaptation S5 est donc déclenchée. Une nouvelle résolution maximale est donc décidée.

Dans l'exemple des figures 3a, 3b, la résolution maximale est abaissée d'un niveau : parmi les résolutions r1, r2, r3, la résolution maximale de meilleure qualité r1 est donc supprimée. A la suite de la détection de l'état de charge, la requête R en nouveaux segments spécifie donc la résolution r2 comme résolution maximale.

A l'itération de la figure 3b, le serveur S transmet donc des segments aux résolutions r2 et r3.

Le terminal T2 recevait déjà le flux de segments de contenu dans la résolution r2 et il n'y a donc pas de changement pour lui. Il en va de même pour le terminal T3 qui recevait déjà le contenu dans la résolution r3.

Par contre le terminal T1 recevait précédemment le flux de segments dans la résolution r1. Cette résolution r1 n'étant plus disponible, il doit s'adapter en choisissant (par exemple) la résolution maximale disponible, r2.

Ultérieurement, si l'état de charge de l'agent A s'améliore, il pourra requérir à nouveau la résolution r1 auprès du serveur S et rendre cette résolution r1 disponible auprès des terminaux T1, T2, T3. Le terminal T1 pourra alors choisir de souscrire à nouveau à cette résolution.

Comme évoqué précédemment, « rendre disponible » une résolution peut consister à publier un fichier manifeste accessible aux terminaux et spécifiant les différentes résolutions disponibles.

Selon un mode de réalisation, l'étape d'adaptation S5 comprend également la transmission à au moins un terminal d'un message adapté pour déclencher une requête de ce terminal vers le serveur S pour recevoir les segments de contenu.

Autrement dit, l'agent force la déconnexion d'un ou plusieurs terminaux en le redirigeant directement vers le serveur. Ainsi, l'agent A n'a plus à gérer les étapes de réception et distribution des segments pour ce ou ces terminaux, ce qui soulage ses ressources propres.

Toutefois, cette redirection peut être faite pour chaque itération, de sorte que l'agent a toujours le contrôle et peut, lorsque l'étape S4 de vérification du critère de charge montre une amélioration de l'état de charge de l'agent, reconnecter le ou les terminaux en question. A nouveau, l'agent jouera le rôle d'intermédiaire, et de serveur nano-CDN : il recevra les segments du serveur S et les distribuera aux terminaux dans la résolution requise.

Ce mécanisme peut être une alternative, pour le terminal, à la dégradation de la résolution du contenu. Suite à la détermination d'une résolution maximale plus basse, le (ou les) terminal qui y était associé peut être redirigé directement vers le serveur S.

Dans l'exemple de la figure 3b, le terminal T1 peut ainsi télécharger les segments de contenus en résolution r1 directement depuis le serveur S.

Selon un mode de réalisation, ce mécanisme peut permettre d'éviter de dégrader la résolution maximale et donc fournit une alternative à l'étape d'adaptation basée sur la détermination d'une nouvelle résolution maximale.

Par exemple, si plusieurs terminaux reçoivent un même contenu dans la résolution maximale, mais qu'un unique terminal (ou un nombre inférieur) reçoit un autre contenu, même dans une résolution plus faible, il peut être choisi d'abaisser cette résolution, et de rediriger ce-derniers vers le serveur S, afin de soulager l'agent A.

Bien entendu, la présente invention n'est pas limitée aux exemples et au mode de réalisation décrits et représentés, mais est défini par les revendications. Elle est notamment susceptible de nombreuses variantes accessibles à l'homme de l'art. 1

## Revendications

1. Procédé de distribution d'un flux de segments d'un contenu issu d'un serveur (S) par au moins un agent vers une pluralité de terminaux, le procédé comprenant, à différents instants au cours de la réception dudit contenu :
- une étape de vérification (S4) d'un critère de charge dudit agent, et,
- une étape d'adaptation (S5) en fonction de ladite vérification, de la distribution des segments de contenu vers les terminaux.

2. Procédé selon la revendication précédente, dans lequel le contenu est issu d'un serveur (S) dans un mode de transmission multi-résolutions en réponse à une requête (S1) spécifiant une résolution maximale, et dans lequel ladite adaptation comprend une détermination d'une nouvelle résolution maximale pour transmission (S1) d'une requête suivante vers ledit serveur (S).

3. Procédé selon la revendication précédente, dans lequel la réception du contenu transmis en mode multi-résolution avec la nouvelle résolution maximale est suivie d'une modification de la distribution des segments de contenu vers les terminaux prenant en compte la nouvelle résolution maximale.

4. Procédé selon l'une des revendications précédentes, dans lequel l'adaptation comprend un établissement d'une connexion d'au moins un terminal de ladite pluralité audit serveur afin de recevoir directement lesdits segments de contenu.

5. Procédé selon la revendication précédente, dans lequel ledit établissement d'une connexion comprend une transmission audit au moins un terminal d'un message adapté pour déclencher une requête dudit au moins terminal vers ledit serveur (S) pour recevoir lesdits segments de contenu.

6. Procédé selon l'une des revendications précédentes dans lequel ladite étape d'adaptation (S5) n'est déclenché que si un nombre de terminaux parmi ladite pluralité est inférieur à un seuil donné.

7. Procédé selon l'une des revendications précédentes, dans lequel ledit critère de charge comprend une comparaison avec un seuil donné d'une mesure d'activité d'un processeur dudit agent et/ou d'une mesure de remplissage d'une mémoire dudit agent

8. Procédé selon l'une des revendications précédentes dans lequel ledit critère de charge dépend d'un nombre de flux reçus par ledit agent et/ou d'un nombre de résolutions et/ou d'un nombre de terminaux de ladite pluralité.

9. Procédé selon l'une des revendications précédentes, dans lequel ledit mode de transmission multi-résolutions est un mode de transmission multicast à débit adaptatif, m-ABR.

10. Procédé selon l'une des revendications précédentes, dans lequel ledit agent est embarqué dans une passerelle.

11. Agent pour la distribution d'un flux de segments d'un contenu issu d'un serveur (S) vers une pluralité de terminaux, ledit agent étant adapté pour, à différents instants au cours de la réception du contenu :
- vérifier un critère de charge dudit agent et,
- en fonction de ladite vérification, adapter la distribution des segments de contenu vers les terminaux.

12. Passerelle comportant un agent selon la revendication précédente.

13. Programme d'ordinateur apte à être mis en oeuvre sur une entité de gestion, le programme comprenant des instructions de code qui, lorsqu'il est exécuté par un processeur, réalise les étapes du procédé définie dans les revendications 1 à 10.

14. Support de données lisible par un ordinateur sur lequel a été mémorisé au moins une série d'instructions de code de programme pour l'exécution d'un procédé selon l'une des revendications 1 à 10.
